# EUROPEAN PATENT APPLICATION

(11) **EP 4 636 868 A1**
(43) Date of publication of application: **22.10.2025**
(21) Application number: 23901943.3
(22) Date of filing: 21.03.2023
(51) Int. Cl.: H01M 4/58, H01M 10/0525

(54) **MODIFIED LITHIUM MANGANESE IRON PHOSPHATE POSITIVE ELECTRODE MATERIAL, AND PREPARATION METHOD THEREFOR AND USE THEREOF**

(30) Priority: 14.12.2022 CN 202211611334
(71) Applicant: Eve Power Co., Ltd., Jingmen, Hubei 448000 (CN)
(72) Inventor: WEN, Shengyao, Jingmen, Hubei 448000 (CN); ZHANG, Lin, Jingmen, Hubei 448000 (CN); LIU, Fanfen, Jingmen, Hubei 448000 (CN); YUAN, Dingding, Jingmen, Hubei 448000 (CN)
(74) Representative: Berggren Oy
(86) International application number: PCT/CN2023/082818
(87) International publication number: WO 2024/124725

(57) **Abstract**

A modified lithium manganese iron phosphate positive electrode material and a preparation method and an application thereof are provided. The modified lithium manganese iron phosphate positive electrode material includes a doped lithium manganese iron phosphate core; and a coating layer disposed on a surface of the doped lithium manganese iron phosphate core. The doped lithium manganese iron phosphate core comprises an Nb element, and the coating layer comprises LiNbO₃ and Nb₂O₅. The modified lithium manganese iron phosphate positive electrode material described in the present disclosure incorporates Nb element and features a dual surface coating of LiNbO₃ and Nb₂O₅. The coating layer of the modified lithium manganese iron phosphate positive electrode material demonstrates excellent uniformity, consistency, and conductivity. LiNbO₃ and Nb₂O₅ synergistically enhance both the rate capability and long-cycle performance of the LMFP electrode material.

## Description

This application claims the priority to Chinese Application No. 202211611334.3, filed on December 14, 2022, the contents of which are incorporated herein by reference in their entirety.

### TECHNICAL FIELD

The present disclosure generally relates to the technical field of lithium-ion battery, and in particular to a modified lithium manganese iron phosphate positive electrode material and a preparation method and an application thereof.

### BACKGROUND

In recent years, the vigorous development of new energy vehicles has driven the rapid growth of demand for lithium-ion power batteries. At present, the positive electrode material of lithium-ion power battery is mainly lithium iron phosphate (LFP) and ternary material. LFP has gradually become a preferred choice of energy storage and power battery companies because of its advantages such as high cost performance, high safety and less limitation by resources. However, the energy density of the LFP is low, which has become a key factor restricting the large-scale application of lithium iron phosphate.

Lithium manganese iron phosphate (LMFP) is a positive electrode material obtained by adding manganese to LFP. The doping of manganese can make LMFP have a higher voltage platform (4.1V vs 3.4V), and the energy density of a battery can increase by 15%. LMFP is therefore a positive electrode material with great application prospects. Currently, the LMFP positive electrode material is still in an early stage of industrialization, mainly because the LMFP has low electron conductivity, a low ion diffusion rate, low initial Coulombic efficiency, and poor cycling performance, which seriously affects the commercial implementation of the LMFP. Therefore, how to improve the electron conductivity, ion transfer rate and cycling stability of the LMFP material is key issues in the current technology. At present, an effective way to solve the technical problem is to carry out an integrated modification of lattice doping and double-coating on the LMFP material.

CN114335480A discloses a method for preparing core-shell carbon-coated doped lithium iron phosphate-like material and application thereof. In the method, a chelation reaction between an iron source, a transition metal compound, and tannic acid is performed to form a chelate compound. The chelate compound is then subjected to a hydrothermal synthesis reaction with a phosphorus source and a lithium source to obtain a tannic acid-coated transition metal ion-doped lithium iron phosphate precursor. Finally, the tannic acid is carbonized by sintering in an inert atmosphere to obtain the core-shell carbon-coated doped lithium iron phosphate-like material. The chelation reaction in the method can inhibit the loss of transition metal ions, and the carbonization of tannic acid can suppress the agglomeration of secondary particles, enabling the obtained cathode material to achieve good rate capability and kinetic performance in applications, though without significant improvement in cycle performance, failing to meet power battery requirements.

CN113942990A discloses a method for preparing carbon-coated and ion-doped lithium manganese iron phosphate cathode material using a coprecipitation reaction. The method overcomes the issues of uneven element distribution, low compaction density, and insufficient specific capacity in lithium manganese iron phosphate cathode materials, but the cycle stability of the material remains poor. The assembled button cells exhibit a capacity fading to 95.8% after 80 cycles at a 1C rate.

### SUMMARY

The following is a summary of the subject matters described in detail herein. The summary is not intended to limit the protection scope of the claims.

The present disclosure provides a modified lithium manganese iron phosphate positive electrode material, its preparation method and application. The modified lithium manganese iron phosphate positive electrode material is doped with Nb element and coated with LiNbO₃ and Nb₂O₅. The coating layer of the modified lithium manganese iron phosphate positive electrode material exhibits excellent uniformity, consistency and conductivity, with LiNbO₃ and Nb₂O₅ synergistically improving the rate capability and long-cycle performance of the LMFP electrode material.

The present application adopts the following technical solutions:
In a first aspect, according to the present disclosure, a modified lithium manganese iron phosphate positive electrode material includes a doped lithium manganese iron phosphate core and a coating layer disposed on a surface of the doped lithium manganese iron phosphate core, the doped lithium manganese iron phosphate core includes an Nb element, and the coating layer includes LiNbO₃ and Nb₂O₅.

According to an embodiment of the present disclosure, the modified lithium manganese iron phosphate positive electrode material is doped with the Nb element, and double-coated with LiNbO₃ and Nb₂O₅ on the surface. After the Nb doping, the material has strong interatomic forces, which can stabilize the lattice structure, improve the dissolution of manganese, reduce Li/Ni mixing, and increase the diffusion coefficient of lithium ions. Nb₂O₅ has strong stability in the working voltage range, which can effectively inhibit the side reaction between the electrode and an electrolyte and enhance the interface stability, thus improving the cycling stability of the LMFP positive electrode material. LiNbO₃ can act as a physical barrier to enhance the interface stability, and act as a fast ion conductor to promote the rapid conduction of lithium ions.

In an embodiment, the doped lithium manganese iron phosphate core has the chemical formula of LiNbₐMnₓFe₁₋ₓPO₄, where 0 < a ≤ 0.05, and 0 < x < 1.

In an embodiment, the coating layer has a thickness of 10-50 nm, for example, 10 nm, 20 nm, 30 nm, 40 nm or 50 nm.

In an embodiment, the molar mass of LiNbO₃ to Nb₂O₅ in the coating layer is 1:(0.1-0.4), for example, 1:0.1, 1:0.15, 1:0.2, 1:0.25, 1:0.3, 1:0.35, or 1:0.4.

In a second aspect, according to the present disclosure, a preparation method for the modified lithium manganese iron phosphate positive electrode material as described above includes:
(1) mixing a lithium source, a manganese source, an iron source and a phosphorus source with a solvent to obtain a mixed salt solution, mixing the mixed salt solution, a niobium source and a complexing agent, and drying and sintering the mixture of the mixed salt solution, the niobium source and the complexing agent to obtain a primary sintered material;
(2) mixing the primary sintered material obtained in step (1), LiNbO₃, Nb₂O₅ with an organic solvent, and grinding; and
(3) baking the material obtained after the grinding in step (2) to obtain the modified lithium manganese iron phosphate positive electrode material.

In an embodiment of the present disclosure, an Nb-doped LMFP is first synthesized. Then LiNbO₃ and Nb₂O₅ are mixed in a certain proportion. Then the LMFP is dry-blended with a coating mixture, and then sintered to obtain a doped and double-coated integrated modified LMFP positive electrode material. The obtained coating layer has good uniformity, consistency and conductivity. The preparation process of the method is simple and controllable, and is easy for large-scale industrial production.

In an embodiment, the lithium source in step (1) includes lithium carbonate and/or lithium dihydrogen phosphate.

In an embodiment, the manganese source includes any one of or a combination of at least two of manganese sulfate, manganese carbonate, manganese nitrate, manganese acetate, or manganese oxalate.

In an embodiment, the iron source includes iron phosphate and/or iron powder.

In an embodiment, the phosphorus source includes phosphoric acid and/or ammonium dihydrogen phosphate.

In an embodiment, the molar ratio of elements in the mixed salt solution is Li:Mn:Fe:P= (1-1.6):x:(1-x):1, where 0 < x < 1.

In an embodiment, the niobium source includes any one of or a combination of at least two of niobium oxide, niobium hydroxide, niobium chloride, niobium sulfate, niobium nitrate or niobium acetate.

In an embodiment, the complexing agent includes sodium alginate.

In an embodiment, the drying in step (1) includes spray drying.

In an embodiment, the temperature of the sintering is 600-900°C, for example, 600°C, 750°C, 800°C, 850°C, or 900°C.

In an embodiment, the time of the sintering is 6-15 h, for example, 6 h, 8 h, 10 h, 12 h, or 15 h.

In an embodiment, the atmosphere for the sintering includes a nitrogen atmosphere.

In an embodiment, the organic solvent in step (2) includes ethanol.

In an embodiment, the speed of the grinding is 500-1000 rpm, for example, 500 rpm, 600 rpm, 700 rpm, 800 rpm, 900 rpm, or 1000 rpm.

In an embodiment, the time of the grinding is 0.3-1 h, for example, 0.3 h, 0.5 h, 0.6 h, 0.8 h, or 1 h.

In an embodiment, the ratio of the total mass of LiNbO₃ and Nb₂O₅ to the mass of the primary sintered material is 0.1-10: 100, for example, 0.1:100, 0.5:100, 1:100, 5:100, or 10:100, preferably 0.5-2:100.

In an embodiment, the temperature of the baking in step (3) is 200-650°C, for example, 200°C, 300°C, 400°C, 500°C or 650°C.

In an embodiment, the time of the baking is 2-15 h, for example, 2 h, 5 h, 8 h, 10 h, or 15 h.

In a third aspect, according to the present disclosure, there is provided a positive electrode including the modified lithium manganese iron phosphate positive electrode material as described above.

In a fourth aspect, according to the present disclosure, there is provided a lithium-ion battery includes the positive electrode as described above.

Compared with the related art, the present disclosure has the following beneficial effects:
(1) The modified lithium manganese iron phosphate positive electrode material of the present disclosure is doped with the Nb element, and double-coated with LiNbO₃ and Nb₂O₅ on the surface. The coating layer of the modified lithium manganese iron phosphate positive electrode material has good uniformity, consistency and conductivity. LiNbO₃ and Nb₂O₅ function together to improve the rate performance and long cycling performance of the LMFP electrode material.
(2) The Nb⁵⁺ is doped into a layered transition metal oxide positive electrode material, which can inhibit cation mixing and significantly improve the rate and cycling stability of the material. Because of its high lithium ion conductivity, the LiNbO₃ coating on the modified positive electrode material can effectively isolate an organic electrolyte while ensuring that the rate performance of the material is not reduced. Therefore, the construction of the Nb⁵⁺ doping and LiNbO₃ structure will have a synergistic effect and significantly improve the rate and the cycling and safety performance. T-Nb₂O₅ (T-phase niobium oxide) has a special lithium ion transport channel, and has excellent rate performance, which is comparable to the best solid electrolyte. At present, T-phase niobium oxide has been used as a high rate negative electrode material for lithium batteries. Using T-Nb₂O₅ as the niobium source, when the Nb⁵⁺ doping/LiNbO₃ coating structure is constructed, the excess niobium source (T-Nb₂O₅) will remain on the surface of the material to act as a physical protective layer without reducing the rate performance of the material.

Upon reading and comprehending the detailed description, other aspects will become apparent.

### DETAILED DESCRIPTION OF PREFERRED EMBODIMENTS

### Example 1

According to an embodiment of the present disclosure, a modified lithium manganese iron phosphate positive electrode material is prepared by a method including step (1), step (2) and step (3).

At step (1), lithium carbonate, manganese sulfate, iron powder, and phosphoric acid were weighed in a molar ratio of Li:Mn:Fe:P= 1.08:0.7:0.3: 1, added to deionized water, dispersed, stirred and subject to ball milling. Then niobium chloride and sodium alginate were added. The mixture was spray dried after stirring for 3 h at a stirring speed of 1000 rpm, and put into a box furnace protected by a nitrogen atmosphere, heated to 780°C at a heating rate of 5°C, and held for 10 h to obtain a primary sintered material.

At step (2), LiNbO₃ and Nb₂O₅ were added in a molar ratio of 1:0.25 to a high-speed mixer and mixed at a speed of 800 rpm for a mixing time of 0.5 h to obtain a coating mixture. Then the coating mixture and the primary sintered material obtained in step (1) were dispersed in an ethanol solvent, stirred and ground. The ratio of the mass of the coating mixture to the mass of the primary sintered material is 1%, the ball milling speed was 600 rpm, and the ball milling time was 2 h.

At step (3), the product was sintered in a nitrogen atmosphere at a heating rate of 8°C/min at a sintering temperature of 650°C for a sintering time of 2 h, and then cooled to room temperature in the nitrogen atmosphere to obtain the modified lithium manganese iron phosphate positive electrode material. The modified lithium manganese iron phosphate positive electrode material has a coating layer with a thickness of 25 nm.

### Example 2

According to an embodiment of the present disclosure, a modified lithium manganese iron phosphate positive electrode material is prepared by a method including step (1), step (2) and step (3).

At step (1), lithium carbonate, manganese sulfate, iron powder, and phosphoric acid were weighed in a molar ratio of Li:Mn:Fe:P=1.08:0.7:0.3:1, added to deionized water, dispersed, stirred and subject to ball milling, then niobium chloride and sodium alginate were added. The mixture was spray dried after stirring for 3 h at a stirring speed of 1200rpm, and put into a box furnace protected by a nitrogen atmosphere, heated to 790°C at a heating rate of 8°C, and held for 9 h to obtain a primary sintered material.

At step (2), LiNbO₃ and Nb₂O₅ were added in a molar ratio of 1:0.3 to a high-speed mixer and mixed at a speed of 850 rpm for a mixing time of 0.5 h to obtain a coating mixture. Then the coating mixture and the primary sintered material obtained in step (1) were dispersed in an ethanol solvent, stirred and ground. The ratio of the mass of the coating mixture to the mass of the primary sintered material is 1%, the ball milling speed was 600 rpm, and the ball milling time was 2 h.

At step (3), the product was sintered in a nitrogen atmosphere at a heating rate of 8°C/min at a sintering temperature of 680°C for a sintering time of 2 h, and then cooled to room temperature in the nitrogen atmosphere to obtain the modified lithium manganese iron phosphate positive electrode material.

### Example 3

This example differs from Example 1 only in that the mass ratio of LiNbO₃ to Nb₂O₅ was 1:0.05, and other conditions and parameters were exactly the same as in Example 1.

### Example 4

This example differs from Example 1 only in that the mass ratio of LiNbO₃ and Nb₂O₅ was 1:0.6, and other conditions and parameters were exactly the same as in Example 1.

### Comparative Example 1

This comparative example differs from Example 1 only in that Nb was not doped in the core, and other conditions and parameters were exactly the same as in Example 1.

### Comparative Example 2

This comparative example differs from Example 1 only in that LiNbO₃ was not added, and other conditions and parameters were exactly the same as in Example 1.

### Comparative Example 3

This comparative example differs from Example 1 only in that Nb₂O₅ was not added, and other conditions and parameters were exactly the same as in Example 1.

### Performance Test:

The lithium manganese iron phosphate positive electrode material prepared in each of Examples 1-4 and Comparative Examples 1-3 was selected as a positive electrode material, a graphite carbon material was selected as a negative electrode material, and a PE/PP polymer material was selected as a separator. The materials were assembled into a jelly roll by winding or laminating, packaged in an aluminum shell or an aluminum plastic film, to which a lithium-ion electrolyte composed of EC/EMC and LiPF₆ was injected. Thereby, an aluminum shell or pouch lithium-ion battery was assembled. The battery was tested for its discharge rate at 3C and the capacity retention rate after 1000 cycles at 1C at 25°C. The test results were shown in Table 1.

**Table 1**

| | Discharge rate (%) | Cycle capacity retention rate (%) |
|---|---|---|
| Example 1 | 96.8 | 96.9 |
| Example 2 | 95.0 | 95.6 |
| Example 3 | 94.6 | 95.0 |
| Example 4 | 93.2 | 97.2 |
| Comparative Example 1 | 88.4 | 90.1 |
| Comparative Example 2 | 85.0 | 89.0 |
| Comparative Example 3 | 96.0 | 85.0 |

From the comparison between Example 1 and Examples 3-4, it can be seen that in the modified lithium manganese iron phosphate positive electrode material according to the present disclosure, the mass ratio of LiNbO₃ to Nb₂O₅ will affect the performance of the modified lithium manganese iron phosphate positive electrode material. When the mass ratio of LiNbO₃ to Nb₂O₅ is controlled at 1:(0.1-0.4), the performance of the obtained positive electrode material is better. If the mass proportion of LiNbO₃ is too great, the material has a poor stability, and a low cycle capacity retention rate. If the mass proportion of Nb₂O₅ is too great, the rate performance of the material is poor.

From the comparison between Example 1 and Comparative Example 1, it can be seen that the modified lithium manganese iron phosphate core according to the present disclosure has strong interatomic forces after Nb doping, which can stabilize the lattice structure, improve the dissolution of manganese, reduce Li/Ni mixing, and increase the diffusion coefficient of lithium ions.

From the comparison between Example 1 and Comparative Example 2, it can be seen that LiNbO₃ can not only act as a physical barrier to enhance interface stability, but also act as a fast ion conductor to promote the rapid conduction of lithium ions.

From the comparison between Example 1 and Comparative Example 3, it can be seen that Nb₂O₅ has strong stability in a working voltage range, which can effectively inhibit a side reaction between the electrode and an electrolyte and enhance the interface stability, thus improving the cycling stability of the LMFP positive electrode material.

## Claims

1. A modified lithium manganese iron phosphate positive electrode material, comprising:
a doped lithium manganese iron phosphate core; and
a coating layer disposed on a surface of the doped lithium manganese iron phosphate core,
wherein the doped lithium manganese iron phosphate core comprises an Nb element, and the coating layer comprises LiNbO₃ and Nb₂O₅.

2. The modified lithium manganese iron phosphate positive electrode material according to claim 1, wherein the doped lithium manganese iron phosphate core has a chemical formula of LiNbₐMnₓFe₁₋ₓPO₄, wherein 0 < a ≤ 0.05, and 0 < x < 1.

3. The modified lithium manganese iron phosphate positive electrode material according to claim 1 or 2, wherein the coating layer has a thickness of 10-50 nm; and optionally, a mass ratio of LiNbO₃ to Nb₂O₅ in the coating layer is 1:(0.1-0.4).

4. A method for preparing the modified lithium manganese iron phosphate positive electrode material according to any one of claims 1 to 3, the method comprising:
(1) mixing a lithium source, a manganese source, an iron source and a phosphorus source with a solvent to obtain a mixed salt solution, mixing the mixed salt solution, a niobium source and a complexing agent, and drying and sintering the mixture of the mixed salt solution, the niobium source and the complexing agent to obtain a primary sintered material;
(2) mixing the primary sintered material obtained in step (1), LiNbO₃, Nb₂O₅ with an organic solvent, and performing grinding; and
(3) baking the material obtained after the grinding in step (2) to obtain the modified lithium manganese iron phosphate positive electrode material.

5. The method according to claim 4, wherein the lithium source in step (1) comprises lithium carbonate and/or lithium dihydrogen phosphate;
optionally, the manganese source comprises any one of or a combination of at least two of manganese sulfate, manganese carbonate, manganese nitrate, manganese acetate, or manganese oxalate;
optionally, the iron source comprises iron phosphate and/or iron powder;
optionally, the phosphorus source comprises phosphoric acid and/or ammonium dihydrogen phosphate;
optionally, a molar ratio of elements in the mixed salt solution is Li:Mn:Fe:P=(1-1.6):x:(1-x):1, wherein 0<x<1;
optionally, the niobium source comprises any one of or a combination of at least two of niobium oxide, niobium hydroxide, niobium chloride, niobium sulfate, niobium nitrate or niobium acetate; and
optionally, the complexing agent comprises sodium alginate.

6. The method according to claim 4 or 5, wherein the drying in step (1) comprises spray drying;
optionally, the sintering is performed at a temperature of 600-900°C;
optionally, the sintering is performed for 6-15 h; and
optionally, the sintering is performed at an atmosphere comprising a nitrogen atmosphere.

7. The method according to any one of claims 4 to 6, wherein the organic solvent in step (2) comprises ethanol;
optionally, the grinding is performed at a speed of 500-1000 rpm;
optionally, the grinding is performed for 0.3-1 h;
optionally, a ratio of a total mass of LiNbO₃ and Nb₂O₅ to a mass of the primary sintered material is 0.1-10:100, preferably 0.5-2:100.

8. The method according to any one of claims 4 to 7, wherein the baking in step (3) is performed at 200-650°C; and
optionally, the baking is performed for 2-15 h.

9. A positive electrode, comprising the modified lithium manganese iron phosphate positive electrode material according to any one of claims 1 to 3.
